**Europäisches Patentamt**

**European Patent Office**

**Office européen des brevets**

(19)

(11) Veröffentlichungsnummer : **0 038 033**
**B1**

(12)

# EUROPÄISCHE PATENTSCHRIFT

(45) Veröffentlichungstag der Patentschrift :
**25.07.84**

(51) Int. Cl.³ : **G 01 N 21/90**

(21) Anmeldenummer : **81102710.1**

(22) Anmeldetag : **09.04.81**

(54) Schaltungsanordnung zum Feststellen von Flecken auf einem Objekt.

(30) Priorität : **14.04.80 DE 3014191**

(43) Veröffentlichungstag der Anmeldung :
**21.10.81 Patentblatt 81/42**

(45) Bekanntmachung des Hinweises auf die Patenterteilung : **25.07.84 Patentblatt 84/30**

(84) Benannte Vertragsstaaten :
**DE FR NL**

(56) Entgegenhaltungen :
**DE-A- 2 848 316**
**FR-A- 2 081 853**
**FR-A- 2 400 199**
**US-A- 3 727 068**
**US-A- 3 818 127**
**US-A- 3 920 970**
**US-A- 3 932 042**

(73) Patentinhaber : **SIEMENS AKTIENGESELLSCHAFT**
**Berlin und München Wittelsbacherplatz 2**
**D-8000 München 2 (DE)**

(72) Erfinder : **Marguerre, Hans-Helmut, Dipl.-Phys.**
**Mähfeldstrasse 23**
**D-7541 Straubenhardt 4 (DE)**

**Beschreibung**

Die Erfindung betrifft eine Schaltungsanordnung zum Feststellen von Flecken auf einem Objekt gemäß dem Oberbegriff des Anspruchs 1 bzw. gemäß dem Oberbegriff des Anspruchs 3.

In der DE-B-20 11 470 ist eine Anordnung beschrieben, mit der Objekte zeilenweise abgetastet und in ein Videosignal umgesetzt werden und die einen Vergleicher enthält, dessen einem Eingang das Videosignal und dessen anderem Eingang ein Referenzsignal zugeführt ist und der, wenn die Amplitude des Videosignals die des Referenzsignals übersteigt, ein das Objekt kennzeichnendes Signal abgibt. Mit dieser bekannten Anordnung können Flecken in einem Bild auch dann erkannt werden, wenn der Fleckenrand unscharf ist. Auch diese bekannte Anordnung hat aber den Nachteil, daß bei ungleichförmiger Ausleuchtung des Objektes oder unterschiedlicher Empfindlichkeit der Abtasteinrichtung die Amplitude des Videosignals sich bezüglich des Referenzsignals so ändert, daß die von Flecken herrührenden Videosignale vom Vergleicher nicht mehr oder fehlerhaft erfaßt werden. Zur Beseitigung dieser Schwierigkeit ist angegeben, zunächst ein Leerbild aufzunehmen, dessen Videosignale ein Maß für die Ausleuchtung und die Empfindlichkeit der Abtasteinrichtung sind. Diese Videosignale werden gespeichert und damit die bei der folgenden Bildabtastung gewonnenen Videosignale im Sinne einer Konstanthaltung der Empfindlichkeit der Abtastvorrichtung gesteuert. Dieses bekannte Verfahren benötigt somit zu seiner Durchführung einen Speicher, dessen Kapazität so groß sein muß, daß er ein vollständiges Bild speichern kann. Außerdem muß vorausgesetzt werden, daß ein Leerbild aufgenommen werden kann. Gerade diese Voraussetzung ist häufig nicht gegeben, z. B., wenn Flaschenböden auf Reinheit untersucht werden sollen. In diesem Falle liegt nämlich die Hauptursache für eine ungleichmäßige Helligkeit des Bilduntergrundes darin, daß die Dicke der einzelnen Flaschenböden örtlich unterschiedlich ist und daß ferner die Böden von Flasche zu Flasche verschieden dick sind. Die ungleichmäßige Grundhelligkeit ist daher in den zu messenden Objekten selbst begründet ; mit der Aufnahme eines Leerbildes kann diese Schwierigkeit nicht beseitigt werden.

Eine Schaltungsanordnung zum Feststellen von Flecken auf Objekten, mit der die genannte Schwierigkeit behoben werden soll, ist aus der US-A-3 818 127 bekannt. Das Videosignal wird mit einem Referenzsignal verglichen, und es wird ein einen Fleck kennzeichnendes Signal abgegeben, wenn die Amplitude des Videosignals das konstante Referenzsignal übersteigt. Zum Ausgleich von unterschiedlichen Grundhelligkeiten der Objekte ist das Videosignal über einen Tiefpaß geführt. Mit dessen Ausgangssignal wird ein zeilenfrequentes Signal gebildet, das dem Videosignal so überlagert wird, daß Unterschiede in der Grundhelligkeit ausgeglichen werden.

Eine Schaltung mit ähnlicher Funktion beschreibt die US-A-3 920 970. Auch dort wird ein Referenzsignal gebildet, das aus dem Mittelwert des Ausgangssignals einer elektrooptischen Abtasteinrichtung abgeleitet wird und das dem einen Eingang eines Vergleichers zugeführt wird, dessen anderer Eingang das Ausgangssignal der elektrooptischen Abtasteinrichtung unverändert erhält.

Besteht eine Änderung der Grundhelligkeit in Zeilenrichtung, so tritt das Problem auf, daß sich das Korrektursignal für das Videosignal am Zeilenanfang mit der Zeitkonstante des Tiefpasses auf den Anfangswert einstellt. In dieser Zeit können Fehler bei der Videosignalauswertung entstehen. Unter Zeilenanfang ist dabei die Stelle der Abtastzeilen verstanden, in der die Abtastzeile zum erstenmal den Rand des Objektes schneidet. Das Objekt kann dabei auch ein Teil eines Gegenstandes, z. B. der Boden einer auf Reinheit zu prüfenden Flasche, sein. Der vorliegenden Erfindung liegt die Aufgabe zugrunde, die im Oberbegriff der Ansprüche 1 und 4 angegebenen Schaltungsanordnungen dahingehend zu verbessern, daß die erwähnten Fehler am Zeilenanfang vermieden sind.

Erfindungsgemäß wird diese Aufgabe mit den in den Ansprüchen 1 und 3 angegebenen Schaltungsanordnungen gelöst.

Mit diesen Maßnahmen wird erreicht, daß dem Vergleicher von Beginn der Abtastung des Objektes an ein Referenzsignal mit einer im richtigen Verhältnis zum Videosignal stehenden Amplitude zugeführt wird und praktisch keine Einschwingvorgänge des Referenzsignals stattfinden.

Zum Ausgleichen der von Objekt zu Objekt auftretenden Helligkeitsunterschiede kann mit einem Signal, das proportional zur Intensität des vom jeweiligen Objekt ausgesandten Lichtes ist, der Verstärkungsgrad des Verstärkers für das dem einen Eingang des Vergleichers zugeführte Videosignal und/oder die Empfindlichkeit der Abtasteinrichtung und/oder im Falle der Anordnung nach Anspruch 1 die Amplitude des Referenzsignals gesteuert werden. Im Falle, daß das Objekt, auf dem Flecken festgestellt werden sollen, der Boden einer transparenten Flasche ist, wird vorteilhaft das Bild des Flaschenbodens und eines Teils der angrenzenden Flaschenwand durch den Flaschenhals von der Abtasteinrichtung aufgenommen, und es wird aus den beim Abtasten des Bildes der Flaschenwand erzeugten Videosignalen ein Signal zum Steuern der Videosignalamplitude und/oder der Empfindlichkeit der Abtasteinrichtung und/oder im Falle der Anordnung nach Anspruch 1 der Amplitude des Referenzsignals abgeleitet.

Anhand der Zeichnung werden im folgenden Ausführungsbeispiele der Erfindung sowie weitere Vorteile und Ausgestaltungen näher beschrieben und erläutert.

Die Figuren 1 und 3 zeigen Prinzipschaltbilder von Ausführungsbeispielen,

Figur 2 veranschaulicht die Funktion und die Anwendung der Ausführungsbeispiele nach Figur 1 und 3.

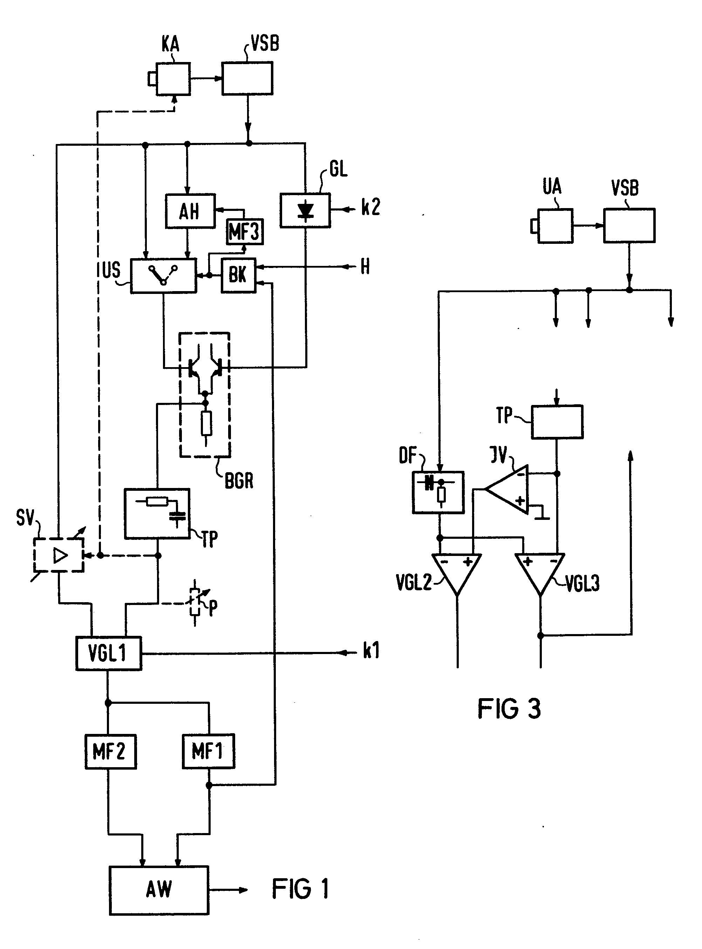

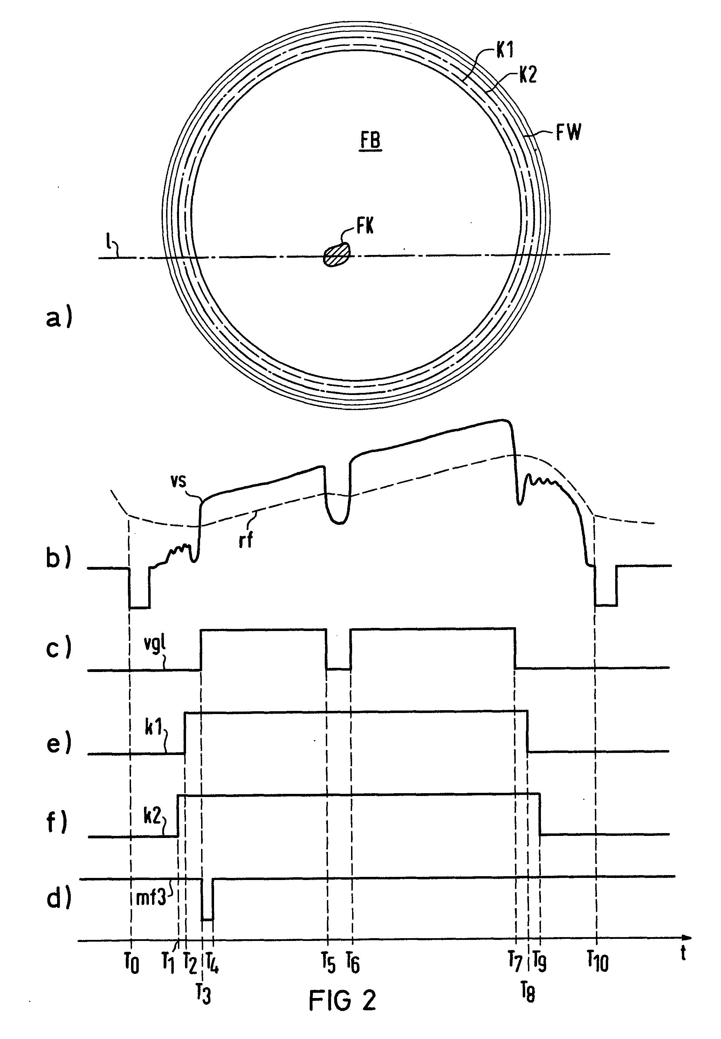

In Figur 1 ist mit KA eine Fernsehkamera bezeichnet, die in einem Anwendungsfall den von unten beleuchteten Boden und einen Teil der Innenwand einer nicht dargestellten Flasche durch deren Hals aufnimmt. Das dabei entstehende Bild ist in Figur 2a dargestellt. Die innere Kreisfläche ist der Flaschenboden FB, in dem sich ein Fremdkörper FK als Fleck befindet. Um den Boden FB erscheint die Innenwand FW der Flasche als konzentrische Ringe, die Bedeutung von zwei gestrichelt gezeichneten Kreisen K1, K2 wird weiter unten erläutert werden. Eine strichpunktiert gezeichnete Fernsehzeile 1 schneidet das Bild des Fremdkörpers FK. Das Zeitdiagramm des bei der Abtastung dieser Zeile entstehenden Videosignals vs ist in Figur 2b veranschaulicht. Nach dem Zeilensynchronimpuls steigt das Videosignal beim Abtasten des Bildes der Flascheninnenwand an. Da die Innenwand im wesentlichen durch den Boden beleuchtet ist, ist die Amplitude im wesentlichen durch die Transmission des Flaschenbodens bedingt, so daß aus dieser Amplitude auf die Gesamthelligkeit des Flaschenbodens geschlossen werden kann. Diese ist im allgemeinen höher als die der Flascheninnenwand, so daß, wenn die Abtastung das Bild des Flaschenbodens trifft, das Videosignal einen Sprung macht. Es wird angenommen, daß der Flaschenboden auf der linken Seite dicker ist als auf der rechten und infolgedessen das Videosignal während der Abtastung entlang der Zeile 1 ansteigt. Erreicht die Abtastung das Bild des Fremdkörpers FK, sinkt das Videosignal kurzzeitig ab, um danach weiter anzusteigen, bis die Abtastung das Bild des Flaschenbodens verläßt. Danach bleibt das Videosignal zunächst noch wegen der Abtastung der Flascheninnenwand auf mittlerer Amplitude, bis es dann auf den Schwarzpegel absinkt, auf den der nächste Synchronimpuls folgt.

Von der Kamera KA gelangt das Videosignal auf eine Einheit VSB, in der es verstärkt wird und in der ferner die Synchronimpulse abgetrennt werden. Das so gewonnene Videosignal wird über einen Verstärker SV dem einen Eingang eines Vergleichers VGL1 zugeführt, dessen anderer Eingang an ein Tiefpaßfilter TP angeschlossen ist, dessen Eingang über einen Begrenzer BGR, der zunächst außer acht gelassen werden soll, an den Ausgang eines Umschalters US angeschlossen ist. Dessen erstem Eingang ist das Videosignal der Einheit VSB und dessen zweitem Eingang das Ausgangssignal einer Abtast- und Halteschaltung AH zugeführt, an deren Eingang ebenfalls das Videosignal liegt. Der Umschalter US ist von einer bistabilen Kippstufe BK gesteuert, die von den Horizontal-Synchronimpulsen H in den Schaltzustand gesetzt wird, in dem sie den Umschalter US in die gestrichelt gezeichnete, den Ausgang der Abtast- und Halteschaltung AH mit den Tiefpaßfilter TP verbindende Stellung bringt. Mit dem Ausgangsimpuls einer dem Vergleicher VGL1 nachgeschalteten monostabilen Kippstufe MF1 wird die Kippstufe BK zurückgesetzt und der Umschalter US in die andere Stellung gebracht, in der dem Tiefpaßfilter TP unmittelbar das Videosignal der Einheit VSB zugeführt ist. Der Vergleicher VGL1 vergleicht das Videosignal mit dem als Referenzsignal dienenden Ausgangssignal des Tiefpaßfilters TP. Mit seinem Ausgangssignal steuert er zwei monostabile Kippstufen MF1, MF2 an, von denen die Kippstufe MF2 von den negativen Flanken und die Kippstufe MF1 von den positiven umgeschaltet wird. Ihre Ausgangssignale werden einer Auswerteeinheit AW zugeführt, die feststellt, ob ein Fleck in dem von der Kamera KA aufgenommenen Objekt vorhanden ist, z. B. ob ein Flaschenboden verunreinigt ist, und die daraufhin ein Auswurfsignal für die jeweilige Flasche abgibt.

An die Kippstufe MF1 ist, wie schon erwähnt, der Rücksetzeingang der bistabilen Kippstufe BK angeschlossen, die ihrerseits mit der Rückflanke ihrer Ausgangsimpulse eine monostabile Kippstufe MF3 in den astabilen Schaltzustand versetzt, in dem diese die Übernahme des Videosignals in die Abtast- und Halteschaltung AH steuert.

Anhand der Impulsdiagramme der Figur 2 wird im folgenden die Funktion der Schaltung nach Figur 1 näher erläutert. Der in Figur 2b gezeigte Verlauf des Videosignals vs wurde schon oben beschrieben. Mit rf ist das von Tiefpaßfilter TP dem Vergleicher zugeführte Referenzsignal bezeichnet. Zum Zeitpunkt $T_0$ wird mit dem Horizontal-Synchronimpuls der Umschalter US in die Stellung gebracht, in der das Ausgangssignal der Abtast- und Halteschaltung AH dem Tiefpaßfilter TP zugeführt wird. Mit dessen Zeitkonstante, die kleiner als die Zeilenabtastperiode ist, nahert sich daher das Referenzsignal rf dem in der Abtast- und Halteschaltung gespeicherten Wert. Zum Zeitpunkt $T_3$, wenn die Abtastung den Flaschenboden FB trifft, steigt das Videosignal vs über das Referenzsignal rf an, und der Vergleicher VGL1 gibt einen Impuls mit positiver Flanke ab (Figur 2c), auf den die Kippstufe MF1 anspricht, deren Ausgangsimpuls die bistabile Kippstufe BK zurücksetzt. Mit der Rückflanke des Ausgangsimpulses der bistabilen Kippstufe BK wird die monostabile Kippstufe MF3 in den astabilen Zustand geschaltet, die ein Signal mf3 (vergleiche Figur 2d) auf die Abtast- und Halteschaltung AH gibt, welche während dieses Impulses das Videosignal der Einheit VSB übernimmt. In ihr ist also das Videosignal gespeichert, das auftritt, wenn die Abtastung den Flaschenboden erreicht hat.

Schon zum Zeitpunkt $T_3$ hatte die bistabile Kippstufe BK den Umschalter US in die Stellung gebracht, in der er das Videosignal auf das Tiefpaßfilter TP leitet, so daß dieser nunmehr ein dem Mittelwert des Videosignals entsprechendes Referenzsignal rf bildet. Die Amplitude dieses Signals kann so eingestellt werden, daß sie im geeigneten Abstand unter der Amplitude des Videosignals liegt, so daß, wenn die Abtastung

zum Zeitpunkt $T_5$ den Fremdkörper FK erreicht und das Videosignal kurzzeitig absinkt, das Referenzsignal größer ist als das Videosignal und der Vergleicher VGL1 einen den Fremdkörper kennzeichnenden Impuls abgibt. Zum Zeitpunkt $T_6$ verläßt die Abtastung das Bild des Fremdkörpers FK, das Videosignal vs steigt über das Referenzsignal rf an, und der Vergleicher VGL1 sowie die Kippstufe MF1 geben erneut einen Ausgangsimpuls ab. Auf diesen spricht die bistabile Kippstufe BK nicht an, da sie zuvor von einem Horizontal-Synchronimpuls nicht gesetzt war. Videosignal vs und Referenzsignal rf steigen danach weiter an, bis zum Zeitpunkt $T_7$ die Abtastung den Flaschenboden verläßt und das Videosignal unter das Referenzsignal absinkt, so daß auch das Vergleicherausgangssignal verschwindet. Mit dem Videosignal sinkt danach auch das Referenzsignal ab, bis zum Zeitpunkt $T_{10}$ die Schaltstellung des Umschalters US geändert wird und der in der Abtast- und Halteschaltung AH gespeicherte Wert auf das Tiefpaßfilter TP geschaltet wird, so daß, wenn die Abtastung in der nächsten Zeile den Flaschenboden erreicht, der Tiefpaß schon die Referenzsignalamplitude abgibt, die der Videosignalamplitude entspricht. Ohne den Umschalter und die Abtast- und Halteschaltung würde das Referenzsignal rf nach Auftreffen der Abtastung auf den Flaschenboden sich mit der Zeitkonstante des Tiefpaßfilters auf den richtigen Wert einstellen. In dieser Zeit könnten Fremdkörper, die am Rande des Flaschenbodens vorhanden sind, nicht festgestellt werden.

In der bisherigen Beschreibung der Anordnung nach Figur 1 wurde nur der Fall behandelt, daß das Referenzsignal dem Videosignal nachgeführt wird. Es ist aber auch möglich, statt dessen oder zusätzlich das Videosignal konstant zu halten, indem das Ausgangssignal des Tiefpaßfilters als Steuersignal dem steuerbaren Verstärker SV zugeführt ist. Ferner kann mit dem Ausgangssignal des Tiefpasses die Empfindlichkeit der Kamera KA gesteuert sein. Die Verbindung des Tiefpasses zum Vergleicher VGL1 kann in diesen Fällen entfernt sein und als Referenzspannung die an einem Potentiometer P abgegriffene konstante Spannung verwendet werden.

Zeigen die Objekte, auf denen Flecken festgestellt werden sollen, große Unterschiede ihrer Grundhelligkeit, so ist es vorteilhaft, ein Kriterium zu haben, das vor Beginn der eigentlichen Auswertung Auskunft gibt über die Grundhelligkeit des jeweiligen Objektes. Bei Flaschen wurde festgestellt, daß sich der Boden an der Innenwand abbildet und daß daher bei geeigneter Auslegung der Aufnahmeoptik durch Aufnahme der Innenwand Videosignale gebildet werden, deren Amplitude ein Maß für die Grundhelligkeit des Bodens ist, da die Flascheninnenwand durch das Licht, das durch den Flaschenboden eintritt, beleuchtet wird. Aus diesen Videosignalen kann daher eine Regelspannung für den Ausgleich der unterschiedlichen Grundhelligkeiten abgeleitet werden, mit der die Amplitude des Referenzsignals und/oder des Videosignals geregelt wird.

Im Ausführungsbeispiel nach Figur 1 ist hierzu das Ausgangssignal der Einheit VSB einem Spitzenwertgleichrichter GL zugeführt, dessen Ausgangssignal über den Begrenzer BGR auf das Tiefpaßfilter TP gelangt. Das Ausgangssignal des Gleichrichters bewirkt ein Referenzsignal, dessen Amplitude geringfügig über dem des bei der Abtastung der Flascheninnenwand entstehenden Videosignals liegt. Dieses Signal kann als Konstante dem in der beschriebenen Weise erzeugten Referenzsignal zugefügt werden. Im Ausführungsbeispiel ist die Anordnung jedoch so gewählt, daß der Spitzenwertgleichrichter GL nur dann freigegeben ist, wenn ihm ein Freigabesignal k2 (vergleiche Figur 2f) zugeführt ist, und daß sein Ausgangssignal infolge des Begrenzers BGR nur dann wirksam ist, wenn es größer als das Ausgangssignal des Umschalters US ist. Das Freigabesignal k2 wird dann erzeugt, wenn das Umfeld des zu prüfenden Objektes, im Ausführungsbeispiel das außerhalb des Kreises K2 liegende Bild der Flascheninnenwand, abgetastet wird. Im Zeitpunkt $T_1$ wird das Freigabesignal abgeschaltet und damit der Spitzenwertgleichrichter unwirksam gemacht. Erst zum Zeitpunkt $T_9$, wenn die Bodenfläche mit Sicherheit abgetastet ist, wird das Freigabesignal wieder eingeschaltet. Bei einer kreisförmigen Fläche, wie es bei einem Flaschenboden der Fall ist, kann das Signal k2 in einer an sich bekannten Kreisaustast-Schaltung gebildet werden, wobei die Lage und Fläche des dabei gebildeten Kreises so gewählt sein müssen, daß mit Sicherheit das zu prüfende Objekt innerhalb dieser Fläche liegt. Ein Hauptvorteil des Gleichrichters GL mit dem Begrenzer BGR ist, daß der Tiefpaß TP auf etwa den der jeweiligen Videosignalamplitude entsprechenden Wert schon aufgeladen ist, bevor die von oben nach unten zeilenweise erfolgende Abtastung den oberen Rand des Objektbildes erreicht, also die Abtast- und Halteschaltung die gewünschte Wirkung hat. Es können daher auch Flecken am oberen Objektrand zuverlässig festgestellt werden.

Eine weitere Kreisaustast-Schaltung liefert ein Freigabesignal k1 (vergleiche Figur 2e) an den Vergleicher VGL1. Diese Austastschaltung ist so gewählt, daß der Vergleicher möglichst nur für solche Videosignale freigegeben ist, die durch Abtastung des Objektes gebildet sind. Toleranzen der Objektabmessungen und Lage der Objekte müssen allerdings berücksichtigt werden. Die von der Kreisaustast-Schaltung freigegebene, innerhalb des Kreises K1 (Figur 2a) gelegene Fläche ist daher etwas größer als die Objektfläche im Fernsehbild. Bei der Prüfung von Flaschenböden ist die exakte Größe, Lage und Form des mit den Signalen k1 gebildeten Austastkreises unkritisch, weil das Auftreffen der Abtastung auf den Flaschenboden in der jeweiligen Fernsehzeile durch die Hell-Dunkel-Übergänge und damit durch das Videosignal selbst und nicht durch die Austastsignale bestimmt werden. Günstig wirkt sich dabei die Tatsache aus, daß das Bodenbild von einem dunklen Ring umgeben ist, wie an dem in Figur 2b gezeigten Videosignal vs zu erkennen ist. Er entsteht dadurch daß sich unter dem Flaschenboden eine Kreisblende befindet und daß im Übergangsbereich vom Flaschenboden zur Flascheninnenwand ohnehin weniger Licht in das Kameraobjektiv reflektiert wird.

Im Ausführungsbeispiel sind für die Freigabe des Gleichrichters GL und des Vergleichers VGL1 zwei gesonderte Kreisaustast-Schaltungen vorgesehen, die unterschiedlich große Kreise K1, K2 freigeben. In Figur 2 ist zu erkennen, daß das Freigabesignal k1 im Zeitpunkt $T_2$, also später, erscheint, als das Freigabesignal k2 weggenommen ist (Zeitpunkt $T_1$). Ebenso erscheint das Signal k2 nach Abtasten des Objektes nicht unmittelbar mit dem Verschwinden des Signals k1 im Zeitpunkt $T_8$, sondern erst zu einem späteren Zeitpunkt $T_9$. Bei geringeren Anforderungen an die Störsicherheit können jedoch die beiden Signale k1 und k2 von einer einzigen Schaltung geliefert werden, wobei der Vergleicher freigegeben ist, wenn der Gleichrichter GL gesperrt ist und umgekehrt.

Der Vergleicher VGL1 und das Tiefpaßfilter TP haben die Funktion eines Hochpasses oder Differenziergliedes mit angeschlossenem Komparator. Figur 3 zeigt das Schaltbild einer Anordnung, die gegenüber der nach Figur 1 geringfügig modifiziert ist. Mit KA ist wieder die Fernsehkamera bezeichnet, an welche die Einheit VSB angeschlossen ist. Deren Ausgangssignal wird, wie in der Anordnung nach Figur 1, auf verschiedene Einheiten gegeben, mit dem Unterschied, daß es nicht unverändert auf einen Vergleicher gelangt, sondern über ein Differenzierglied DF geführt ist, an welches die invertierenden Eingänge von zwei Vergleichern VGL2, VGL3 angeschlossen sind. Die Referenzspannung für den Vergleicher VGL3 wird unmittelbar dem Tiefpaßfilter TP entnommen, während die für den Vergleicher VGL2 von einem Invertierer IV geliefert wird, der an das Tiefpaßfilter TP angeschlossen ist. Bei positiv gerichtetem Videosignal gibt das Tiefpaßfilter TP ein positives Signal ab. Das Abtasten eines Objektes wird, wenn dieses hell ist, zu einem positiven Rechtecksignal führen. Das Differenzierglied DF gibt am Anfang der positiven Videosignale einen positiven Impuls und am Ende einen negativen ab. Überschreitet der positive Impuls das Ausgangssignal des Tiefpaßfilters TP, spricht der Vergleicher VGL3 an und gibt einen Impuls ab. Die negativen Ausgangsimpulse des Differenziergliedes DF bewirken, wenn ihre Amplitude absolut größer ist als das invertierte Ausgangssignal des Tiefpaßfilters TP, einen Impuls am Ausgang des Vergleichers VGL2. Die Ausgangsimpulse der Vergleicher VGL2, VGL3 entsprechen daher denen der monostabilen Kippstufe MF1, MF2 der Anordnung nach Figur 1 und können in gleicher Weise verarbeitet werden.

## Ansprüche

1. Schaltungsanordnung zum Feststellen von Flecken auf einem Objekt, mit
— einer elektrooptischen Abtasteinrichtung (KA, VSB) zur Erzeugung eines die Helligkeit des Objekts entlang zeilenförmiger Abtastpfade repräsentierenden Videosignals,
— einem von dem Videosignal beaufschlagten Tiefpaßfilter (TP), dessen Zeitkonstante kleiner als die Zeilenperiode der Abtastung ist,
— einem eingangsseitig mit der Abtasteinrichtung sowie dem Tiefpaßfilter verbundenen Vergleicher (VGL1) zum Vergleich der Amplituden des Videosignals und des ein Referenzsignal bildenden Ausgangssignals des Tiefpaßfilters,
— Einrichtungen (MF1, MF2, AW) zur Ableitung eines einen Flecken charakterisierenden Signals aus den Ausgangssignalen des Vergleichers,
gekennzeichnet durch
— eine Abtast- und Halteschaltung (AH), die jeweils von einer Abtastzeile zur nächsten denjenigen Amplitudenwert des Videosignals speichert, der jeweils zu Beginn der Abtastung des Objekts innerhalb einer Abtastzeile vorliegt, und
— eine Umschalteinrichtung (US, BK) über welche das Tiefpaßfilter (TP) während des vor der Abtastung des Objekts liegenden Abschnitts einer jeden Abtastzeile mit der Abtast- und Halteschaltung (AH) und anschließend direkt mit der Abtasteinrichtung (KA, VSB) verbunden ist.

2. Schaltungsanordnung nach Anspruch 1, dadurch gekennzeichnet, daß zusätzlich ein Verstärker (SV) zur Steuerung des Verstärkungsgrades des dem Vergleicher (VGL1) zugeführten Videosignals und/oder Einrichtungen zur Steuerung der Empfindlichkeit der Abtasteinrichtung (KA, VSB) jeweils gleichsinnig mit dem Ausgangssignal des Tiefpaßfilters (TP) vorgesehen sind.

3. Schaltungsanordnung zum Feststellen von Flecken auf einem Objekt mit
— einer elektrooptischen Abtasteinrichtung (KA, VSB) zur Erzeugung eines die Helligkeit des Objekts entlang zeilenförmiger Abtastpfade repräsentierenden Videosignals,
— einem von dem Videosignal beaufschlagten Tiefpaßfilter (TP), dessen Zeitkonstante kleiner als die Zeilenperiode der Abtastung ist,
— einer Referenzsignalquelle (P) zur Erzeugung eines Referenzsignals,
— einem eingangsseitig mit der Abtasteinrichtung sowie der Referenzsignalquelle verbundenen Vergleicher (VGL1) zum Vergleich der Amplituden des Videosignals und des Referenzsignals,
— Einrichtungen (MF1, MF2, AW) zur Ableitung eines einen Flecken charakterisierenden Signals aus den Ausgangssignalen des Vergleichers,
gekennzeichnet durch
— eine Abtast- und Halteschaltung (AH), die jeweils von einer Abtastzeile zur nächsten denjenigen Amplitudenwert des Videosignals speichert, der jeweils zu Beginn der Abtastung des Objekts innerhalb einer Abtastzeile vorliegt, und
— eine Umschalteinrichtung (US, BK), über welche das Tiefpaßfilter (TP) während des vor der Abtastung des Objekts liegenden Abschnitts einer jeden Abtastzeile mit der Abtast- und Halteschaltung (AH) und anschließend direkt mit der Abtasteinrichtung (KA, VSB) verbunden ist,

— einen Verstärker (SV) zur Steuerung des Verstärkungsgrades des dem Vergleicher (VGL1) zugeführten Videosignals und/oder Einrichtungen zur Steuerung der Empfindlichkeit der Abtasteinrichtung (KA, VSB) jeweils gleichsinnig mit dem Ausgangssignal des Tiefpaßfilters (TP),

— ein konstantes Referenzsignal.

4. Schaltungsanordnung nach Anspruch 1, 2 oder 3, dadurch gekennzeichnet, daß das Videosignal einem Spitzenwertgleichrichter (GL), zugeführt ist, der während der Zeiten freigegeben ist, in denen die Abtasteinrichtung (KA, VSB) das Umfeld des Objektes (FB) abtastet und daß das Ausgangssignal des Umschalters (US) und das des Spitzenwertgleichrichters (GL) einem Begrenzer (BGR) zugeführt sind, der das Signal mit der größeren Amplitude auf das Tiefpaßfilter (TP) durchschaltet.

5. Schaltungsanordnung nach einem der Ansprüche 1 bis 4, dadurch gekennzeichnet, daß eine Schaltungsanordnung vorhanden ist, die ein Freigabesignal (k1) an den Vergleicher (VGL1) abgibt, wenn die Abtasteinrichtung einen für die Objektbilder vorgesehenen Bildbereich abtastet.

**Claims**

1. A circuit arrangement for detecting spots on an object, with

— an electro-optical scanning device (KA, VSB) which serves to produce a video signal which represents the brightness of the object along scanning paths in the form of lines ;

— a low-pass filter (TP) which is supplied with the video signal and whose time constant is smaller than the scanning line period ;

— a comparator (VGL1) whose input is connected to the scanning device and to the low-pass filter and which serves to compare the amplitudes of the video signal and a reference signal formed by the low-pass filter output signal ;

— and devices (MF1, MF2, AW) which obtain from the output signals of the comparator, a signal characteristic of a spot, characterised by

— a sample and hold circuit (AH) which stores from each scanning line to the next, that amplitude value of the video signal which in each case prevails at the beginning of the scanning of the object within a scanning line and

— a switch-over device (US, BK) via which the low-pass filter (TP) is connected to the sample and hold circuit (AH) during that section of each scanning line which precedes the scanning of the object, and is subsequently directly connected to the scanning device (KA, VSB).

2. A circuit arrangement as claimed in Claim 1, characterised in that there is additionally provided an amplifier (SV) which serves to control the degree of amplification of the video signal supplied to the comparator (VGL1), and/or devices which serve to control the sensitivity of the scanning device (KA, VSB), in each case in accordance with the output signal of the low-pass filter (TP).

3. A circuit arrangement for detecting spots on an object, with

— an electro-optical scanning device (KA, VSB) which serves to produce a video signal which represents the brightness of the object along scanning paths in the form of lines ;

— a low-pass filter (TP) which is supplied with the video signal and whose time constant is smaller than the scanning line period ;

— a reference signal source (P) which serves to produce a reference signal ;

— a comparator (VGL1) whose input is connected to a scanning device and to a reference signal source and which serves to compare the amplitudes of the video signal and the reference signal ;

— and devices (MF1, MF2, AW) which obtain from the output signals of the comparator a signal characteristic of a spot, characterised by

— a sample and hold circuit (AH) which stores from each scanning line to the next, that amplitude value of the video signal which in each case prevails at the beginning of the scanning of the object within a scanning line and

— a switch-over device (US, BK) via which the low-pass filter (TP) is connected to the sample and hold circuit (AH) during that section of each scanning line which precedes the scanning of the object, and is subsequently directly connected to the scanning device (KA, VSB),

— an amplifier (SV) which controls the degree of amplification of the video signal supplied to the comparator (VGL1) and/or devices for controlling the sensitivity of the scanning device (KA, VSB) in each case in accordance with the output signal of the low-pass filter (TP),

— and a constant reference signal.

4. A circuit arrangement as claimed in Claim 1, 2 or 3, characterised in that the video signal is fed to a peak value rectifier (GL) which is released during those periods of time in which the scanning device (KA, VSB) scans the outer field of the object (FB), and that the output signal of the change-over switch (US) and that of the peak value rectifier (GL) are fed to a limiter (BGR) which switches through to the low-pass filter (TP) the signal which possesses the greater amplitude.

5. A circuit arrangement as claimed in one of Claims 1 to 4, characterised in that a circuit arrangement is provided which emits a release signal (k1) to the comparator (VGL1) when the scanning device scans an image zone provided for the object images.

**Revendications**

1. Montage pour détecter des taches sur un objet, comportant

— un dispositif d'exploration électro-optique (KA, VSB) servant à produire un signal vidéo représentant la luminosité de l'objet le long de trajets d'exploration en forme de lignes,

— un filtre passe-bas (TP) chargé par le signal vidéo et dont la constante de temps est inférieure à la période des lignes de l'exploration,

— un comparateur (VGL1) relié, du côté entrée, au dispositif d'exploration ainsi qu'au filtre passe-bas et servant à comparer les amplitudes du signal vidéo et du signal de sortie du filtre passe-bas constituant un signal de référence,

— des dispositifs (MF1, MF2, AW) servant à dériver un signal caractérisant une tache à partir des signaux de sortie du comparateur, caractérisé par

— un circuit (AH) d'exploration et de maintien, qui mémorise, depuis une ligne d'exploration jusqu'à la ligne d'exploration suivante, la valeur de l'amplitude qui est présente respectivement au début de l'exploration de l'objet à l'intérieur d'une ligne d'exploration, et

— un dispositif de commutation (US, BK) au moyen duquel le filtre passe-bas (TP) est relié, pendant la partie de chaque ligne d'exploration, située avant l'exploration de l'objet, au circuit d'exploration et de maintien (AH) et ensuite directement au dispositif d'exploration (KA, VSB).

2. Montage suivant la revendication 1, caractérisé par le fait qu'il est prévu en outre un amplificateur (SV) servant à commander le taux d'amplification du signal vidéo envoyé au comparateur (VGL1) et/ou des dispositifs servant à commander la sensibilité du dispositif d'exploration (KA, VSB) dans le même sens que le signal de sortie du filtre passe-bas (TP).

3. Montage pour détecter des taches sur un objet, comportant

— un dispositif d'exploration électro-optique (KA, VSB) servant à produire un signal vidéo représentant la luminosité de l'objet le long de trajets d'exploration en forme de lignes,

— un filtre passe-bas (TP) chargé par un signal vidéo et dont la constante de temps est inférieure à la période de ligne de l'exploration,

— une source (P) servant à produire un signal de référence,

— un comparateur (VGL1) relié, du côté entrée, au dispositif d'exploration ainsi qu'à la source du signal de référence et servant à comparer les amplitudes du signal vidéo et du signal de référence,

— des dispositifs (MF1, MF2, AW) servant à dériver un signal caractérisant une tache à partir des signaux de sortie du comparateur, caractérisé par

— un circuit (AH) d'exploration et de maintien, qui mémorise, depuis une ligne d'exploration jusqu'à la ligne d'exploration suivante, la valeur de l'amplitude qui est présente respectivement au début de l'exploration de l'objet à l'intérieur d'une ligne d'exploration, et

— un dispositif de commutation (US, BK) au moyen duquel le filtre passe-bas (TP) est relié, pendant la partie de chaque ligne d'exploration, située avant l'exploration de l'objet, au circuit d'exploration et de maintien (AH) et ensuite directement au dispositif d'exploration (KA, VSB), et

— un amplificateur (SV) servant à commander le taux d'amplification du signal vidéo envoyé au comparateur (VGL1) et/ou des dispositifs servant à commander la sensibilité du dispositif d'exploration (AK, ASB) respectivement dans le même sens que le signal de sortie du filtre passe-bas (TP),

— un signal de référence constant.

4. Montage suivant la revendication 1, 2 ou 3, caractérisé par le fait que le signal vidéo est envoyé à un redresseur de valeurs maximum (GL) qui est libéré pendant les intervalles de temps, pendant lesquels le dispositif d'exploration (KA, VSB) explore le champ environnant de l'objet (FB) et que le signal de sortie du commutateur (US) et le signal de sortie du redresseur de valeurs maximum (GL) sont envoyés à un limiteur (BGR) qui transmet le signal avec une amplitude accrue au filtre passe-bas (TP).

5. Montage suivant l'une des revendications 1 à 4 caractérisé par le fait qu'il est prévu un montage qui délivre un signal de libération (K1) au comparateur (VGL1) lorsque le dispositif d'exploration explore une zone d'image prévue pour les images de l'objet.

FIG 1

FIG 3

a)

b)

c)

e)

f)

d)

FIG 2